# EUROPEAN PATENT APPLICATION

(11) **EP 3 858 895 A1**
(43) Date of publication of application: **04.08.2021**
(21) Application number: 19866902.0
(22) Date of filing: 25.09.2019
(51) Int. Cl.: C08J 5/18, B29C 48/35, B29C 59/04, B32B 27/30, B60J 1/00, C03C 27/12

(54) **POLYVINYL ACETAL RESIN FILM, AND LAMINATE INCLUDING SAME**

(30) Priority: 26.09.2018 JP 2018180671
(71) Applicant: Kuraray Co., Ltd., Kurashiki-shi, Okayama 710-0801 (JP)
(72) Inventor: SHIMAZUMI, Yuhi, Kurashiki-shi, Okayama 713-8550 (JP); KUSUDOU, Takeshi, Kurashiki-shi, Okayama 713-8550 (JP); ISOUE, Koichiro, Kurashiki-shi, Okayama 713-8550 (JP); YASUDA, Hirotaka, Kurashiki-shi, Okayama 713-8550 (JP); KOBAYASHI, Takuya, Kurashiki-shi, Okayama 713-8550 (JP)
(74) Representative: Müller-Boré & Partner Patentanwälte PartG mbB
(86) International application number: PCT/JP2019/037612
(87) International publication number: WO 2020/067162

(57) **Abstract**

The present invention relates to a polyvinyl acetal resin film, comprising a polyvinyl acetal resin material,
wherein
the polyvinyl acetal resin film has a thickness of 10 to 350 µm,
one surface has a 10-point average roughness Rz value of less than 2 µm and a friction angle of larger than 31° but 40° or smaller,
the other surface has a 10-point average roughness Rz value of 2 µm to 7 µm and a friction angle of 20° to 31°,
a viscosity of a toluene/ethanol (1:1, mass ratio) solution containing 10%-by-mass of a polyvinyl acetal resin contained in the polyvinyl acetal resin material, which is measured at 20°C and 30 rpm using a Brookfield-type (B-type) viscometer, is 100 to 1,000 mPa·s, and
the amount of a plasticizer in the polyvinyl acetal resin film is 0 to 20% by mass based on a total mass of the polyvinyl acetal resin film.

## Description

### TECHNICAL FIELD

The present invention relates to a polyvinyl acetal resin film, and a laminate comprising the same.

### BACKGROUND ART

Films formed of a polyvinyl acetal resin are widely used as intermediate films of laminated glasses for various vehicles and buildings because of their excellent transparency, flexibility, shock absorption, adhesion with glass, and the like. These films are generally stored in a state of being wound in the form of a roll until use; however, over time, irregularities are formed on both end surfaces of such a film roll due to slippage of edge portions, which is likely to cause both end surfaces to have a heterogeneous shape in a so-called bamboo shoot form. A roll-form scroll in which, for the inhibition of such edge misalignment in a film roll, a paper tube for winding core whose at least the outermost layer is formed of a surface treated paper is used, has been proposed (Patent Document 1).

### PRIOR ART DOCUMENT

### PATENT DOCUMENT

[Patent Document 1] Japanese Laid-Open Patent Publication No. 2001-97640

### SUMMARY OF THE INVENTION

### PROBLEMS TO BE SOLVED BY THE INVENTION

However, in the roll-form scroll disclosed in Patent Document 1 in which a paper tube for winding core whose outermost layer is formed of a surface treated paper is used, although edge misalignment between the surface layer of the core paper tube and a film to be wound thereon can be inhibited, edge misalignment caused by slippage or self-adhesion of films that are brought adjacent to each other by winding cannot be sufficiently inhibited. In addition, there are such problems that self-adhesion of adjacent films is likely to cause film breakage at the time of unwinding, and formation of irregularities on the film surface at the time of unwinding makes the film surface heterogeneous. In order to inhibit such self-adhesion, a method of interposing a plastic film (e.g., a polyethylene film) having low adhesion to the desired film may be employed; however, this requires the removal of the plastic film at the time of use and thus has poor ease of handling.

In view of the above, an object of the present invention is to provide a low-plastic or non-plastic polyvinyl acetal resin film which not only hardly causes edge misalignment or self-adhesion of a film roll over time when wound into the form of a roll, but also has a uniform surface when unwound from the roll.

### MEANS FOR SOLVING PROBLEMS

The present inventors intensively studied to solve the above-described problems, thereby completing the present invention. That is, the present invention provides the following preferred embodiments.
[1] A polyvinyl acetal resin film, comprising a polyvinyl acetal resin material,
   wherein
   the polyvinyl acetal resin film has a thickness of 10 to 350 µm,
   one surface has a 10-point average roughness Rz value of less than 2 µm and a friction angle of larger than 31° but 40° or smaller,
   the other surface has a 10-point average roughness Rz value of 2 µm to 7 µm and a friction angle of 20° to 31°,
   the 10-point average roughness Rz values are values determined in accordance with JIS B0601-1994,
   the friction angles are values determined in accordance with the inclination method prescribed in JIS P8147,
   a viscosity of a toluene/ethanol (1:1, mass ratio) solution containing 10%-by-mass of a polyvinyl acetal resin contained in the polyvinyl acetal resin material, which is measured at 20°C and 30 rpm using a Brookfield-type (B-type) viscometer, is 100 to 1,000 mPa·s, and
   the amount of a plasticizer in the polyvinyl acetal resin film is 0 to 20% by mass based on a total mass of the polyvinyl acetal resin film.
[2] The polyvinyl acetal resin film according to [1], wherein an absolute difference between the friction angle of one surface and that of the other surface is 2° to 10°.
[3] The polyvinyl acetal resin film according to [1] or [2], wherein an absolute difference between the 10-point average roughness Rz value of one surface and that of the other surface is 1 µm to 5 µm.
[4] The polyvinyl acetal resin film according to any one of [1] to [3], wherein the viscosity of the toluene/ethanol (1:1, mass ratio) solution containing 10%-by-mass of the polyvinyl acetal resin contained in the polyvinyl acetal resin material, which is measured at 20°C and 30 rpm using a Brookfield-type (B-type) viscometer, is 300 mPa·s or lower.
[5] The polyvinyl acetal resin film according to any one of [1] to [3], wherein the viscosity of the toluene/ethanol (1:1, mass ratio) solution containing 10%-by-mass of the polyvinyl acetal resin contained in the polyvinyl acetal resin material, which is measured at 20°C and 30 rpm using a Brookfield-type (B-type) viscometer, is higher than 200 mPa·s.
[6] The polyvinyl acetal resin film according to any one of [1] to [5], wherein the polyvinyl acetal resin in the polyvinyl acetal resin material has a molecular weight distribution of 2.7 or higher.
[7] The polyvinyl acetal resin film according to any one of [1] to [6], wherein the polyvinyl acetal resin in the polyvinyl acetal resin material is a mixture of at least two polyvinyl acetal resins having different viscosity-average polymerization degrees, or an acetalized product of a mixture of at least two polyvinyl alcohol-based resins having different viscosity-average polymerization degrees.
[8] A laminate, comprising the polyvinyl acetal resin film according to any one of [1] to [7] between a plurality of transparent substrates.
[9] The laminate according to [8], further comprising a plasticized polyvinyl acetal resin layer.
[10] The laminate according to [8] or [9], wherein the transparent substrate is a glass.
[11] A glass for a vehicle, comprising the laminate according to any one of [8] to [10].

### EFFECTS OF THE INVENTION

According to the present invention, a low-plastic or non-plastic polyvinyl acetal resin film which not only hardly causes edge misalignment or self-adhesion of a film roll over time when wound into the form of a roll, but also has a uniform surface when unwound from the roll, can be provided.

### MODE FOR CARRYING OUT THE INVENTION

Embodiments of the present invention will now be described in detail; however, the present invention is not restricted thereto.

### <Polyvinyl Acetal Resin Film>

One surface of the polyvinyl acetal resin film of the present invention has a 10-point average roughness Rz value of less than 2 µm and a friction angle of larger than 31° but 40° or smaller, and the other surface has a 10-point average roughness Rz value of 2 µm to 7 µm and a friction angle of 20° to 31°. A conventional polyvinyl acetal resin film used as an intermediate film for laminated glass generally has the same surface profile on both surfaces, while in the polyvinyl acetal resin film of the present invention, one surface thereof and the other surface have different surface profiles from each other. As a result, when the elongated film is wound into the form of a roll after its formation, fine voids are generated between one surface and the other surface of adjacent resin films, and the adhesion between these films is thereby appropriately reduced, so that self-adhesion over time can be inhibited. In addition, since the generation of roll wrinkles caused by self-adhesion of the films and entrapment of air can be inhibited, a film roll having a uniform surface at the time of unwinding can be obtained. Moreover, by controlling not only the surface roughness but also the friction angle of the resin film, films coming adjacent to one another at the time of winding are brought into contact with each other with appropriate adhesiveness; therefore, slippage and self-adhesion between the films are inhibited, so that the occurrence of edge misalignment over time can be inhibited.

One surface of the polyvinyl acetal resin film of the present invention has a 10-point average roughness Rz value of less than 2 µm. In the present invention, the surface having a 10-point average roughness of less than 2 µm is a relatively smooth surface (hereinafter, the 10-point average roughness of a smoother surface of the film is also referred to as "Rz1"). With the Rz1 being 2 µm or higher, when the resin film is wound into the form of a roll, appropriate voids are hardly generated between this surface and the other relatively rough surface having a 10-point average roughness Rz value of 2 µm to 7 µm (hereinafter, the 10-point average roughness of a rougher surface of the film is also referred to as "Rz2"), and generation of roll wrinkles and self-adhesion are thus unlikely to be inhibited. In the present invention, the Rz1 is preferably 1.8 µm or less, more preferably 1.6 µm or less. A lower limit of the Rz1 is not particularly restricted and may be 0.1 µm; however, it is usually not less than 0.2 µm.

The 10-point average roughness of a resin film surface can be measured in accordance with JIS B0601-1994 using a surface roughness meter or a laser microscope. The measurement is preferably performed using a contact-type surface roughness meter. Specifically, the 10-point average roughness can be measured by the method described below in the section of Examples.

The other surface of the polyvinyl acetal resin film of the present invention has a 10-point average roughness Rz value (Rz2) of 2 µm to 7 µm. When the Rz2 is less than 2 µm, the adhesion between this surface and the other surface having an Rz1 of less than 2 µm is increased, and this makes generation of roll wrinkles and self-adhesion more likely to occur; therefore, a uniform surface is unlikely to be obtained at the time of unwinding. Meanwhile, when the Rz2 is higher than 7 µm, the adhesion between this surface and the other surface is reduced, making edge misalignment of the film roll more likely to occur. In the present invention, the Rz2 is preferably 2.5 µm or higher, more preferably 3 µm or higher, but preferably 6.5 µm or less, more preferably 6 µm or less, still more preferably 5.5 µm or less.

In the polyvinyl acetal resin film of the present invention, an absolute difference between the 10-point average roughness Rz value (Rz1) of one surface and the 10-point average roughness Rz value (Rz2) of the other surface is preferably 1 µm to 5 µm. When the absolute difference in 10-point average roughness between one surface and the other surface is in this range, the resin film have different surface profiles between one surface and the other surface; therefore, appropriate voids are generated between adjacent films when the resin film is wound into the form of a roll, and generation of roll wrinkles and self-adhesion during storage are inhibited. In addition, edge misalignment over time can be effectively inhibited since the adjacent films have appropriate adhesion. In the present invention, the above-described absolute difference in 10-point average roughness is preferably 1.5 µm or larger, more preferably 2 µm or larger, but preferably 4.5 µm or smaller.

In the present invention, the 10-point average roughness of the polyvinyl acetal resin film can be adjusted by, for example, controlling the surface profile and the material of a roll used in the formation of the film from a polyvinyl acetal resin material by a melt-extrusion method, controlling the press pressure in melt-extrusion molding, controlling the embossing conditions (e.g., resin film temperature and roll surface temperature), and/or selecting an appropriate polyvinyl acetal resin material.

In the polyvinyl acetal resin film of the present invention, the surface having a 10-point average roughness of less than 2 µm (hereinafter, also referred to as "surface 1") has a friction angle of larger than 31° but 40° or smaller. When the friction angle of the surface 1 is 31° or smaller, the adhesion of the surface 1 with the other surface having a friction angle of 20° to 31° (hereinafter, also referred to as "surface 2") is enhanced, making self-adhesion more likely to occur when the resin film is wound into the form of a roll. Meanwhile, when the friction angle of the surface 1 is larger than 40°, the adhesion of the surface 1 with the surface 2 is reduced, and this tends to make edge misalignment more likely to occur. In the present invention, the friction angle of the surface 1 is preferably 39° or smaller, more preferably 38° or smaller.

The friction angle of a resin film surface can be measured in accordance with JIS P8147 using an ordinary friction tester. Specifically, the friction angle can be measured by the method described below in the section of Examples.

In the polyvinyl acetal resin film of the present invention, the surface 2 having a 10-point average roughness of 2 µm to 7 µm has a friction angle of 20° to 31°. When the friction angle of the surface 2 is smaller than 20°, the adhesion of the surface 2 with the surface 1 is enhanced, making self-adhesion more likely to occur when the resin film is wound into the form of a roll. Meanwhile, when the friction angle of the surface 2 is larger than 31°, the adhesion of the surface 2 with the surface 1 is reduced, and this tends to make edge misalignment more likely to occur. In the present invention, the friction angle of the surface 2 is preferably 23° or larger, more preferably 24° or larger, but preferably 30° or smaller.

In the polyvinyl acetal resin film of the present invention, an absolute difference between the friction angle of one surface (surface 1) and that of the other surface (surface 2) is preferably 2° to 10°. When the absolute difference in friction angle between the surface 1 and the surface 2 is in this range, films that are brought adjacent to one another at the time of winding the resin film into the form of a roll are in contact with each other having appropriate adhesiveness; therefore, not only the occurrence of edge misalignment over time can be effectively inhibited but also self-adhesion during storage can be inhibited, so that a uniform surface is likely to be obtained at the time of unwinding. In the present invention, the above-described absolute difference in friction angle is preferably 2.5° or larger, more preferably 3° or larger, but preferably 9° or smaller, more preferably 8° or smaller.

In the present invention, the friction angle of the polyvinyl acetal resin film can be adjusted by, for example, controlling the surface profile and the material of a roll used in the formation of a film from a polyvinyl acetal resin material by a melt-extrusion method, controlling the press pressure in melt-extrusion molding, controlling the embossing conditions (e.g., resin film temperature and roll surface temperature), and/or selecting an appropriate polyvinyl acetal resin material.

The polyvinyl acetal resin film of the present invention has a thickness of 10 to 350 µm. When the thickness is less than 10 µm, shrinkage and deformation of the polyvinyl acetal resin film are likely to occur. Meanwhile, with the thickness being greater than 350 µm, when a plasticized polyvinyl acetal resin layer is bonded adjacent to the polyvinyl acetal resin film of the present invention, the amount of a plasticizer migrating from the plasticized polyvinyl acetal resin layer to the polyvinyl acetal resin film of the present invention is increased; therefore, the penetration resistance of the resulting laminate is likely to be reduced, and this makes it difficult to obtain, for example, a sufficient effect of reducing the head impact on collision when the laminate is used as a vehicle glass. The thickness of the polyvinyl acetal resin film is preferably 20 µm or greater, more preferably 30 µm or greater, but preferably 330 µm or less, more preferably 295 µm or less, still more preferably 270 µm or less, yet still more preferably 250 µm or less, yet still more preferably 150 µm or less, yet still more preferably 120 µm or less, most preferably less than 100 µm. When the thickness of the polyvinyl acetal resin film is in a range of from the above-described lower limit value to the above-described upper limit value, the above-described problems hardly occur, and good film-forming property is likely to be obtained.

The thickness of the polyvinyl acetal resin film can be measured by using, for example, a thickness gauge or a laser microscope.

### (Polyvinyl Acetal Resin)

The polyvinyl acetal resin film of the present invention comprises a polyvinyl acetal resin material comprising a polyvinyl acetal resin. The polyvinyl acetal resin is a resin produced by acetalization of a polyvinyl alcohol or a polyvinyl alcohol-based resin such as an ethylene-vinyl alcohol copolymer. It is noted here that the term "polyvinyl acetal resin material" used in the present invention encompasses both a material composed of a polyvinyl acetal resin and a material composed of a resin composition containing a polyvinyl acetal resin.

In the present invention, the polyvinyl acetal resin in the polyvinyl acetal resin film may comprise one polyvinyl acetal resin, or two or more polyvinyl acetal resins that are different in at least one of viscosity-average polymerization degree, acetalization degree, vinyl acetate unit content, vinyl alcohol unit content, ethylene unit content, molecular weight of aldehyde used for acetalization, and chain length. When the polyvinyl acetal resin film comprises two or more different polyvinyl acetal resins, from the viewpoint of the ease of melt molding and the viewpoint of preventing deformation of a functional layer or the like arranged on a laminated glass as well as misalignment and the like of a glass during the use of the laminated glass, it is preferred that the polyvinyl acetal resin be a mixture of at least two polyvinyl acetal resins having different viscosity-average polymerization degrees, or an acetalized product of a mixture of at least two polyvinyl alcohol-based resins having different viscosity-average polymerization degrees.

The acetalization degree of the polyvinyl acetal resin used in the present invention is preferably 40% by mole or higher, more preferably 45% by mole or higher, still more preferably 50% by mole or higher, yet still more preferably 60% by mole or higher, particularly preferably 68% by mole or higher, but preferably 86% by mole or lower, more preferably 84% by mole or lower, still more preferably 82% by mole or lower. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the acetalization degree is the amount of the above-described acetal-forming unit based on the single repeating unit. When the acetalization degree is in a range of from the above-described lower limit value to the above-described upper limit value, the resulting polyvinyl acetal resin film is likely to have a sufficient mechanical strength, and good compatibility is likely to be obtained between the polyvinyl acetal resin and a plasticizer, which is preferred. In cases where the polyvinyl acetal resin film contains two or more different polyvinyl acetal resins, it is preferred that the acetalization degree of at least one of the polyvinyl acetal resins be in a range of from the above-described lower limit value to the above-described upper limit value. Further, from the viewpoint of water resistance, the acetalization degree of the polyvinyl acetal resin is preferably 65% by mole or higher. The acetalization degree can be adjusted by controlling the amount of an aldehyde used in the acetalization reaction.

The vinyl acetate unit content of the polyvinyl acetal resin is preferably 0.1% by mole or higher, more preferably 0.3% by mole or higher, still more preferably 0.5% by mole or higher, but preferably 30% by mole or less, more preferably 20% by mole or less, and particularly preferably 0.5 to 3% by mole, or 5 to 8% by mole. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the vinyl acetate unit content is the amount of vinyl acetate units based on the single repeating unit. The vinyl acetate unit content can affect the polarity of the polyvinyl acetal resin, which may lead to a change in the plasticizer compatibility or the mechanical strength of the polyvinyl acetal resin film. When the vinyl acetate unit content is in a range of from the above-described lower limit value to the above-described upper limit value, for example, good bonding of the polyvinyl acetal resin film with a plasticized polyvinyl acetal resin layer optionally laminated adjacent thereto, as well as a reduction in optical distortion are likely to be achieved. In cases where the polyvinyl acetal resin film contains two or more different polyvinyl acetal resins, it is preferred that the vinyl acetate unit content of at least one of the polyvinyl acetal resins be in the above-described range. The vinyl acetate unit content can be adjusted by appropriately controlling the saponification degree of the polyvinyl alcohol-based resin used as a raw material.

The vinyl alcohol unit content of the polyvinyl acetal resin is preferably 9 to 36% by mole, more preferably 18 to 34% by mole, still more preferably 22 to 34% by mole, yet still more preferably 26 to 34% by mole, particularly preferably 26 to 31% by mole, particularly more preferably 26 to 30% by mole. Assuming that a unit comprising two carbon atoms of the main chain in a polyvinyl alcohol-based resin used as a raw material for the production of the polyvinyl acetal resin (e.g., a vinyl alcohol unit, a vinyl acetate unit, or an ethylene unit) is a single repeating unit, the vinyl alcohol unit content is the amount of vinyl alcohol units based on the single repeating unit. When the vinyl alcohol unit content is in the above-described range, the difference in refractive index between the polyvinyl acetal resin film and a plasticized polyvinyl acetal resin film optionally laminated adjacent thereto is small, so that a laminated glass with little optical unevenness is likely to be obtained. In order to additionally provide sound insulation performance, the vinyl alcohol unit content is preferably 9 to 29% by mole, more preferably 12 to 26% by mole, still more preferably 15 to 23% by mole, particularly preferably 16 to 20% by mole. In cases where the polyvinyl acetal resin film contains two or more different polyvinyl acetal resins, it is preferred that the vinyl alcohol unit content of at least one of the polyvinyl acetal resins be in the above-described range. The vinyl alcohol unit content can be adjusted in the above-described range by controlling the amount of an aldehyde used in the acetalization reaction.

The polyvinyl acetal resin is usually constituted by an acetal-forming unit, a vinyl alcohol unit and a vinyl acetate unit, and the amount of each unit is determined by, for example, JIS K6728 "Testing Methods for Polyvinyl Butyral" or nuclear magnetic resonance spectroscopy (NMR).

The viscosity of a toluene/ethanol (1:1, mass ratio) solution containing 10%-by-mass of the polyvinyl acetal resin contained in the polyvinyl acetal resin material constituting the polyvinyl acetal resin film of the present invention, which is measured at 20°C and 30 rpm using a Brookfield-type (B-type) viscometer, is 100 to 1,000 mPa·s. When the viscosity is lower than 100 mPa·s, it is difficult to ensure sufficient heat resistance in the use of the polyvinyl acetal resin film as a laminated glass, whereas when the viscosity is higher than 1,000 mPa·s, good film-forming property is unlikely to be obtained.

In one embodiment of the present invention, the viscosity of the toluene/ethanol (1:1, mass ratio) solution containing 10%-by-mass of the polyvinyl acetal resin constituting the polyvinyl acetal resin film, which is measured at 20°C and 30 rpm using a Brookfield-type (B-type) viscometer, is preferably 300 mPa·s or lower, more preferably 250 mPa·s or lower, still more preferably 200 mPa·s or lower, particularly preferably 180 mPa·s or lower. When the viscosity is not higher than this upper limit value, the heating temperature or the heating time can be easily controlled within a desired range in the production of a laminated glass using the polyvinyl acetal resin film, and an unmelted portion of the polyvinyl acetal resin is thus less likely to remain; therefore, yellowing of the polyvinyl acetal resin film is unlikely to occur. Specific examples of a case where the above-described viscosity is preferred include a case where an inorganic layer or a resin layer that hardly allows permeation of a plasticizer therethrough, such as a functional layer comprising a polyester resin, a polyolefin resin or the like, is formed on substantially the entire surface between the polyvinyl acetal resin film and a plasticized polyvinyl acetal resin layer. In such a mode, from the viewpoint of the ease of obtaining a laminated glass without any unmelted portion of the polyvinyl acetal resin, a lower limit value of the above-described viscosity is preferably 100 mPa·s or higher, more preferably 120 mPa·s or higher, particularly preferably 150 mPa·s or higher.

In another embodiment of the present invention, the viscosity of the toluene/ethanol (1:1, mass ratio) solution containing 10%-by-mass of the polyvinyl acetal resin contained in the polyvinyl acetal resin material, which is measured at 20°C and 30 rpm using a Brookfield-type (B-type) viscometer, is preferably higher than 200 mPa·s, more preferably 210 mPa·s or higher, still more preferably 220 mPa·s or higher, yet still more preferably 230 mPa·s or higher, particularly preferably 240 mPa·s or higher, particularly more preferably 265 mPa·s or higher. When the viscosity of the polyvinyl acetal resin is not lower than this lower limit value, a laminated glass in which glass misalignment hardly occurs even at a high temperature can be easily obtained and, even in a case where, for example, a functional layer and a structure such as a conductor are laminated, deformation and breakage thereof can be sufficiently inhibited. In such a enbodiment, from the viewpoint of obtaining good film-forming property, an upper limit value of the viscosity is usually 1,000 mPa·s or lower, preferably 800 mPa·s or lower, more preferably 500 mPa·s or lower, still more preferably 450 mPa·s or lower, particularly preferably 400 mPa·s or lower.

The above-described viscosity can be adjusted by using a polyvinyl acetal resin, which is produced by using a polyvinyl alcohol-based resin having a high viscosity-average polymerization degree as a raw material or a part of the raw material, singly or in combination. When the polyvinyl acetal resin used for forming the polyvinyl acetal resin film is a mixture of plural resins, the above-described viscosity is the viscosity of such a mixture.

The peak-top molecular weight of the polyvinyl acetal resin contained in the polyvinyl acetal resin material is preferably 115,000 to 200,000, more preferably 120,000 to 160,000, particularly preferably 130,000 to 150,000. When the peak-top molecular weight of the polyvinyl acetal resin is in this range, preferred film-forming property and film physical properties (e.g., lamination suitability, creep resistance, and breaking strength) are likely to be obtained. The peak-top molecular weight can be adjusted by using a polyvinyl acetal resin, which is produced by using a polyvinyl alcohol-based resin having a high viscosity-average polymerization degree as a raw material or a part of the raw material, singly or in combination.

The molecular weight distribution, i.e. a ratio (Mw/Mn) of the weight-average molecular weight (Mw) and the number-average molecular weight (Mn), of the polyvinyl acetal resin contained in the polyvinyl acetal resin material is preferably 2.7 or higher, more preferably 2.8 or higher, particularly preferably 2.9 or higher. When the molecular weight distribution of the polyvinyl acetal resin is not lower than this lower limit value, both good film-forming property and preferred film physical properties (e.g., lamination suitability, creep resistance, and breaking strength) are likely to be obtained at the same time. The molecular weight distribution can be adjusted by acetalizing a mixture of polyvinyl alcohol-based resins having different viscosity-average polymerization degrees, or by mixing acetalizated products of polyvinyl alcohol-based resins having different viscosity-average polymerization degrees. An upper limit value of the molecular weight distribution is not particularly restricted; however, from the viewpoint of the ease of film formation, it is usually 10 or lower, preferably 5 or lower.

When the polyvinyl acetal resin material comprises two or more different polyvinyl acetal resins, it is preferred that the peak-top molecular weight and the molecular weight distribution of at least one of the polyvinyl acetal resins be in the above-described respective ranges.

The peak-top molecular weight and the molecular weight distribution can be determined by, for example, gel permeation chromatography (GPC) using a polystyrene of known molecular weight as a standard.

A polyvinyl acetal resin used in the present invention can be produced by a conventionally known method, typically by acetalization of a polyvinyl alcohol-based resin (e.g., a polyvinyl alcohol resin or an ethylene-vinyl alcohol copolymer) with an aldehyde. The method is not restricted; however, specifically, for example, a 3 to 30%-by-mass aqueous solution of a polyvinyl alcohol or an ethylene-vinyl alcohol copolymer is maintained in a temperature range of 80 to 100°C and then slowly cooled over a period of 10 to 60 minutes and, once the temperature is lowered to -10 to 30°C, an aldehyde and an acid catalyst are added, and an acetalization reaction is allowed to proceed for 30 to 300 minutes while maintaining the temperature constant. Next, the resulting reaction solution is heated to a temperature of 20 to 80°C over a period of 30 to 200 minutes, maintained for 30 to 300 minutes, and subsequently filtered as required, after which the reaction solution is neutralized with an addition of a neutralizer such as an alkali, and the thus formed resin is filtered, washed with water, and then dried, whereby a polyvinyl acetal resin that may be used in the present invention can be produced.

The acid catalyst used in the acetalization reaction is not particularly restricted, and either an organic acid or an inorganic acid can be used. Examples of the acid catalyst include acetic acid, p-toluenesulfonic acid, nitric acid, sulfuric acid, and hydrochloric acid. Among them, from the viewpoint of the acid strength and the ease of removal by washing, hydrochloric acid, sulfuric acid, and nitric acid can be preferably used.

From the viewpoint of the ease of obtaining a polyvinyl acetal resin having a preferred breaking energy, the aldehyde or a keto compound used for the production of the polyvinyl acetal resin is preferably a linear, branched, or cyclic compound having 2 to 10 carbon atoms, more preferably a linear or branched compound. Such a compound gives an appropriate linear or branched acetal group. The polyvinyl acetal resin used in the present invention may be an acetalized product obtained by acetalizing a polyvinyl alcohol or an ethylene-vinyl alcohol copolymer with a mixture of plural aldehydes or keto compounds.

The polyvinyl acetal resin used in the present invention is preferably a polyvinyl acetal resin that is produced by a reaction between at least one polyvinyl alcohol-based resin and one or more aliphatic unbranched aldehydes having 2 to 10 carbon atoms. As such an aldehyde, from the viewpoint of the ease of obtaining a polyvinyl acetal resin having a preferred breaking energy, n-butylaldehyde is preferred. The content of n-butylaldehyde in the aldehydes used for acetalization is preferably not less than 50% by mass, more preferably not less than 80% by mass, still more preferably not less than 95% by mass, particularly preferably not less than 99% by mass, and may be 100% by mass. In a preferred embodiment of the present invention, the polyvinyl acetal resin is a polyvinyl butyral resin.

The polyvinyl alcohol-based resin used for the production of the polyvinyl acetal resin may be a single polyvinyl alcohol-based resin, or a mixture of polyvinyl alcohol-based resins having different viscosity-average polymerization degrees, hydrolysis degrees, or the like.

The viscosity-average polymerization degree of the polyvinyl alcohol-based resin used as a raw material of the polyvinyl acetal resin is preferably 100 or higher, more preferably 300 or higher, still more preferably 400 or higher, yet still more preferably 600 or higher, particularly preferably 700 or higher, particularly more preferably 750 or higher. When the viscosity-average polymerization degree of the polyvinyl alcohol-based resin is not lower than this lower limit value, deformation and breakage of a functional layer during the production of a laminated glass are likely to be inhibited, and a phenomenon of glass misalignment caused by heat can be inhibited in the resulting laminated glass. Meanwhile, the viscosity-average polymerization degree of the polyvinyl alcohol-based resin is preferably 5,000 or lower, more preferably 3,000 or lower, still more preferably 2,500 or lower, particularly preferably 2,300 or lower, particularly more preferably 2,000 or lower. When the viscosity-average polymerization degree of the polyvinyl alcohol-based resin is not higher than this upper limit value, good film-forming property is likely to be obtained.

It is noted here that a preferred value of the viscosity-average polymerization degree of the polyvinyl acetal resin is the same as that of the viscosity-average polymerization degree described above for the polyvinyl alcohol-based resin. When polyvinyl acetal resin film comprises two or more different polyvinyl acetal resins, it is preferred that the viscosity-average polymerization degree of at least one of the polyvinyl acetal resins be in a range of from the above-described lower limit value to the above-described upper limit value. The viscosity-average polymerization degree of the polyvinyl alcohol-based resin can be determined in accordance with JIS K6726 "Testing Methods for Polyvinyl Alcohol".

From the viewpoint of the ease of obtaining good film-forming property, the polyvinyl acetal resin film preferably comprises an uncrosslinked polyvinyl acetal. The polyvinyl acetal resin film may also comprise a crosslinked polyvinyl acetal. A method for crosslinking a polyvinyl acetal is described in, for example, EP 1527107 B1 and WO 2004/063231 A1 (thermal self-crosslinking of carboxyl group-containing polyvinyl acetal), EP 1606325 A1 (polyvinyl acetal crosslinked with polyaldehyde), and WO 2003/020776 A1 (polyvinyl acetal crosslinked with glyoxylic acid). It is also useful to control the amount of intermolecular acetal bonds to be formed and/or the blocking degree of a residual hydroxyl group by adjusting the acetalization reaction conditions as appropriate.

### (Plasticizer)

In the present invention, the amount of a plasticizer in the polyvinyl acetal resin film is 0 to 20% by mass based on a total mass of the polyvinyl acetal resin film. When the plasticizer amount is greater than 20% by mass, good film-forming property is unlikely to be obtained. In addition, such a plasticizer amount tends to make deformation of the resin film more likely to occur particularly in a high-temperature environment; therefore, for example, when a functional layer is applied to and laminated on the polyvinyl acetal resin film to produce a laminated glass, good functionality cannot be exerted. By reducing the plasticizer amount or not incorporating any plasticizer, the polyvinyl acetal resin film tends to be provided with excellent film-forming property and ease of handling; however, at the same time, the generation of roll wrinkles is made more likely to occur in a low-plastic or non-plastic polyvinyl acetal resin film. In the polyvinyl acetal resin film of the present invention, one surface of the resin film is provided with a different surface profile from that of the other surface by controlling both surfaces of the resin film to satisfy the above-described specific relationships of the 10-point average roughness and the friction angle. As a result, even in a resin film which by nature easily forms roll wrinkles due to a small plasticizer amount, appropriate voids are generated between adjacent resin films and the generation of roll wrinkles can thus be effectively inhibited, so that a uniform film surface is likely to be obtained when the film is unwound. Accordingly, by laminating a functional layer and the like on the relatively smooth surface (surface 1), a laminated glass in which the functional layer is hardly deformed or broken over time can be obtained, and the polyvinyl acetal resin film of the present invention can be suitably used as a resin film for a laminated glass having such a functional film and the like.

The plasticizer amount is preferably 0 to 19% by mass, more preferably 0 to 15% by mass, still more preferably 0 to 10% by mass, particularly preferably 0 to 5% by mass, based on a total mass of the polyvinyl acetal resin film. When the plasticizer amount in the polyvinyl acetal resin film is in this range, the polyvinyl acetal resin film tends to have excellent film-forming property and ease of handling, and can be suitably used for the production of a laminated glass having a functional layer and the like.

When a plasticizer is incorporated into the polyvinyl acetal resin film, one or more compounds of the following groups are preferably used as the plasticizer.
- Esters of polyvalent aliphatic or aromatic acids, examples of which include: dialkyl adipates (e.g., dihexyl adipate, di-2-ethylbutyl adipate, dioctyl adipate, di-2-ethylhexyl adipate, hexylcyclohexyl adipate, diheptyl adipate, dinonyl adipate, diisononyl adipate, heptylnonyl adipate); esters of adipic acid and an alcohol or an ether compound-containing alcohol [e.g., di(butoxyethyl)adipate and di(butoxyethoxyethyl)adipate]; dialkyl sebacates (e.g., dibutyl sebacate); esters of sebacic acid and an alicyclic or ether compound-containing alcohol; phthalic acid esters (e.g., butylbenzyl phthalate and bis-2-butoxyethyl phthalate); and esters of an alicyclic polycarboxylic acid and an aliphatic alcohol (e.g., diisononyl 1,2-cyclohexane dicarboxylate);
- Esters or ethers of polyvalent aliphatic or aromatic alcohols or oligoether glycols having at least one aliphatic or aromatic substituent, examples of which include: esters of glycerin, diglycol, triglycol, tetraglycol or the like and a linear or branched, aliphatic or alicyclic carboxylic acid, specifically diethylene glycol-bis-(2-ethylhexanoate), triethylene glycol-bis-(2-ethylhexanoate) (hereinafter, may be referred to as "3GO"), triethylene glycol-bis-(2-ethylbutanoate), tetraethylene glycol-bis-n-heptanoate, triethylene glycol-bis-n-heptanoate, triethylene glycol-bis-n-hexanoate, tetraethylene glycol dimethyl ether, and dipropylene glycol dibenzoate;

- Phosphoric acid esters of aliphatic or aromatic alcohols, examples of which include tris(2-ethylhexyl)phosphate, triethyl phosphate, diphenyl-2-ethylhexyl phosphate, and tricresyl phosphate; and
- Esters of citric acid, succinic acid, and/or fumaric acid.

Further, as the plasticizer, a polyester or oligoester formed from a polyhydric alcohol and a polycarboxylic acid, a terminal esterified product or etherified product thereof, a polyester or oligoester formed from lactone or hydroxycarboxylic acid, or a terminal esterified product or etherified product thereof may be used.

When the polyvinyl acetal resin film comprises a plasticizer, from the viewpoint of preventing the problems (e.g., changes in physical properties over time) that are associated with migration of the plasticizer between the polyvinyl acetal resin film and a plasticized polyvinyl acetal resin layer optionally laminated thereon, it is preferred to use the same plasticizer as the one contained in the plasticized polyvinyl acetal resin layer to be laminated, or a plasticizer that does not impair the physical properties (e.g., heat resistance, light resistance, transparency, and plasticization efficiency) of the plasticized polyvinyl acetal resin layer. From this standpoint, the polyvinyl acetal resin film contains, as the plasticizer, preferably triethylene glycol-bis-(2-ethylhexanoate), triethylene glycol-bis-(2-ethylbutanoate), tetraethylene glycol-bis-(2-ethylhexanoate), or tetraethylene glycol bis-heptanoate, particularly preferably triethylene glycol-bis-(2-ethylhexanoate).

The polyvinyl acetal resin film of the present invention may further comprise other additives. Examples of such additives include water, a UV absorber, an antioxidant, an adhesion modifier, a brightener or fluorescent brightener, a stabilizer, a dye, a processing aid, an impact resistance improving agent, a fluidity improving agent, a cross-linking agent, a pigment, a light-emitting material, a refractive index modifier, a heat insulating material, organic or inorganic nanoparticles, a calcined silicate, and a surfactant.

By reducing the amount of gel in the polyvinyl acetal resin film, the generation of convex defects is made less likely to occur on the polyvinyl acetal resin film, and this makes it easier to control the Rz values in a relatively small range. In order to reduce the amount of gel in the polyvinyl acetal resin film, it is useful to inhibit the generation of gel during pelletization of the polyvinyl acetal resin and film formation and, for this purpose, it is useful to add a stabilizer, such as an antioxidant, to the polyvinyl acetal resin material constituting the polyvinyl acetal resin film.

Examples of the antioxidant include phenolic antioxidants, phosphorus-based antioxidants, and sulfur-based antioxidants, among which phenolic antioxidants are preferred, and alkyl-substituted phenolic antioxidants are particularly preferred.

Examples of the phenolic antioxidants include: acrylate compounds, such as 2-*t*-butyl-6-(3-*t*-butyl-2-hydroxy-5-methylbenzyl)-4-methylphenyl acrylate, and 2,4-di-*t*-amyl-6-[1-(3,5-di-*t*-amyl-2-hydroxyphenyl)ethyl]phenyl acrylate; alkyl-substituted phenolic compounds, such as 2,6-di-*t*-butyl-4-methylphenol, 2,6-di-*t*-butyl-4-ethylphenol, octadecyl-3-(3,5-)di-*t*-butyl-4-hydroxyphenyl)propionate, 2,2'-methylene-bis(4-methyl-6-*t-*butylphenol), 4,4'-butylidene-bis(4-methyl-6-*t-*butylphenol), 4,4'-butylidene-bis(6-*t*-butyl-*m*-cresol), 4,4'-thiobis(3-methyl-6-*t*-butylphenol), bis(3-cyclohexyl-2-hydroxy-5-methylphenyl)methane, 3,9-bis{2-}3-(3-*t*-butyl-4-hydroxy-5-methylphenyl)propionyloxy]-1,1-dimethylethyl}-2,4,8,10-tetraoxaspiro[5,5]undecane, 1,1,3-tris(2-methyl-4-hydroxy-5-*t*-butylphenyl)butane, 1,3,5-trimethyl-2,4,6-tris(3,5-di-*t*-butyl-4-hydroxybenzyl)benzene, tetrakis[methylene-3-(3',5'-di-*t*-butyl-4'-hydroxyphenyl)propionate]methane, and triethylene glycol bis[3-(3-*t*-butyl-4-hydroxy-5-methylphenyl)propionate]; and triazine group-containing phenol compounds, such as 6-(4-hydroxy-3,5-di-*t*-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-*t-*butylanilino)-2,4-bis-octylthio-1,3,5-triazine, and 2-octylthio-4,6-bis-(3,5-di-*t*-butyl-4-oxyanilino)-1,3,5-triazine.

Examples of the phosphorus-based antioxidants include: monophosphite compounds, such as triphenyl phosphite, diphenyl isodecyl phosphite, phenyl diisodecyl phosphite, tris(nonylphenyl)phosphite, tris(dinonylphenyl)phosphite, tris(2-*t*-butyl-4-methylphenyl)phosphite, tris(cyclohexylphenyl)phosphite, 2,2-methylene-bis(4,6-dit-butylphenyl)octyl phosphite, 9,10-dihydro-9-oxa-10-phosphaphenanthrene-10-oxide, 10-(3,5-di-*t*-butyl-4-hydroxybenzyl)-9,10-dihydro-9-oxa-10-phosphaphenanthrene-10-oxide, and 10-decyloxy-9,10-dihydro-9-oxa-10-phosphaphenanthrene; and diphosphite compounds, such as 4,4'-butylidene-bis(3-methyl-6-*t*-butylphenyl-di-tridecylphosphite), 4,4'-isopropylidene-bis(phenyl-dialkyl (C₁₂ to C₁₅) phosphite), 4,4'-isopropylidene-bis(diphenylmonoalkyl(C₁₂ to C₁₅) phosphite), 1,1,3-tris(2-methyl-4-di-tridecyl phosphite-5-*t*-butylphenyl)butane, and diphosphite compounds, such as tetrakis(2,4-di-*t-*butylphenyl)-4,4'-biphenylene phosphite. Among these phosphorus-based antioxidants, monophosphite compounds are preferred.

Examples of the sulfur-based antioxidants include dilauryl 3,3'-thiodipropionate, distearyl 3,3-thiodipropionate, laurylstearyl 3,3'-thiodipropionate, pentaerythritol-tetrakis-(*β*-lauryl-thiopropionate), and 3,9-bis(2-dodecylthioethyl)-2,4,8,10-tetraoxaspiro[5.5]undecane.

These antioxidants may be used singly, or in any combination of two or more thereof. The amount of the antioxidant(s) to be added is preferably not less than 0.001 parts by mass, more preferably not less than 0.01 parts by mass, with respect to 100 parts by mass of the polyvinyl acetal resin. When the amount of the antioxidant(s) is not less than the above-described lower limit value, the generation of gel caused by degradation of the polyvinyl acetal resin or the like is likely to be effectively inhibited. Meanwhile, the amount of the antioxidant(s) to be added is usually not greater than 5 parts by mass, preferably not greater than 1 part by mass, more preferably not greater than 0.1 parts by mass, with respect to 100 parts by mass of the polyvinyl acetal resin. The antioxidant(s) may be added in an amount of greater than 5 parts by mass; however, such an amount is not expected to have an outstanding effect in terms of the inhibition of gel generation.

Further, in order to inhibit the oxidative degradation of the polyvinyl acetal resin, it is also preferred to perform at least some of the production steps of the polyvinyl acetal resin film under a nitrogen atmosphere, for example, to purge the vicinities of a feed port and a discharge port with nitrogen at the time of producing the polyvinyl acetal resin film using an extruder.

Examples of other stabilizers include UV absorbers, uv screening agents, and light stabilizers.

Examples of the UV absorbers include: benzotriazole-based UV absorbers, such as 2-(5-methyl-2-hydroxyphenyl)benzotriazole, 2-[2-hydroxy-3,5-bis(*α*,*α*'-dimethylbenzyl)phenyl]-2H-benzotriazole, 2-(3,5-di-*t*-butyl-2-hydroxyphenyl)benzotriazole, 2-(3-*t*-butyl-5-methyl-2-hydroxyphenyl)-5-chlorobenzotriazole, 2-(3,5-di-*t*-butyl-5-methyl-2-hydroxyphenyl)-5-chlorobenzotriazole, 2-(3,5-di-*t-*amyl-2-hydroxyphenyl)benzotriazole, and 2-(2'-hydroxy-5'-*t-*octylphenyl)benzotriazole; hindered amine-based UV absorbers, such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, and 4-[3-(3,5-di-t-butyl-4-hydroxyphenyl)propionyloxy]-1-{2-[3-(3,5-di-*t*-butyl-4-hydroxyphenyl)propionyloxy]ethyl}-2,2,6,6-tetramethylpiperidine; benzoate-based UV absorbers, such as 2,4-di-t-butylphenyl-3,5-di-*t*-butyl-4-hydroxybenzoate and hexadecyl-3,5-di-*t*-butyl-4-hydroxybenzoate; and malonic acid ester-based UV absorbers.

Examples of the malonic acid ester-based UV absorbers include dimethyl 2-(*p*-methoxybenzylidene)malonate, tetraethyl-2,2- (1,4-phenylenedimethylidene)bismalonate, and 2-(p-methoxybenzylidene)-bis(1,2,2,6,6-pentamethyl-4-piperidinyl)malonate. Commercially available malonic acid ester-based UV absorbers may be used, and examples thereof include HOSTAVIN B-CAP, HOSTAVIN PR-25, and HOSTAVIN PR-31 (all of which are manufactured by Clariant).

Examples of the UV screening agents include oxanilide compounds, for example, oxalic diamides having a substituted aryl group or the like on a nitrogen atom, such as *N*-(2-ethylphenyl)-*N*'-(2-ethoxy-5-*t*-butylphenyl)oxalic diamide, *N*-(2-ethylphenyl)-*N*'-(2-ethoxy-phenyl)oxalic diamide, and 2-ethyl-2'-ethoxy-oxanilide ("SANDUVOR VSU" manufactured by Clariant).

The amount of a UV absorber or UV screening agent to be added is preferably not less than 10 ppm, more preferably not less than 100 ppm, based on mass with respect to the polyvinyl acetal resin contained in the polyvinyl acetal resin film. When the amount of the UV absorber or UV screening agent is not less than the above-described lower limit value, a sufficient effect is likely to be exerted. Meanwhile, the amount of the UV absorber or UV screening agent to be added is usually 50,000 ppm or less, preferably 10,000 ppm or less, based on mass with respect to the polyvinyl acetal resin contained in the polyvinyl acetal resin film. A UV absorber or UV screening agent may be added in an amount of greater than 50,000 ppm; however, such an amount is not expected to have an outstanding effect in terms of the inhibition of gel generation.

The above-described UV absorbers and UV screening agents may be used singly, or in any combination of two or more thereof.

As a light stabilizer, a hindered amine-based light stabilizer can be used, and examples of commercially available products thereof include "ADK STAB LA-57 (trade name)" manufactured by ADEKA Corporation.

The amount of the polyvinyl acetal resin in the polyvinyl acetal resin film of the present invention is preferably not less than 75% by mass, more preferably not less than 80% by mass, still more preferably not less than 85% by mass, yet still more preferably not less than 90% by mass, particularly preferably not less than 95% by mass, based on a total mass of the polyvinyl acetal resin film. When the amount of the polyvinyl acetal resin in the polyvinyl acetal resin film is in this range, a polyvinyl acetal resin film having excellent transparency, film-forming property, and ease of handling is likely to be obtained, and the resin film can be suitably used for the production of a laminated glass having a functional layer and the like.

The polyvinyl acetal resin film of the present invention may have a layer separation structure constituted by multiple components; however, in the layer separation structure, island components have an average particle size of preferably smaller than 100 nm, more preferably smaller than 80 nm, and it is particularly preferred that the polyvinyl acetal resin film does not show a sea-island layer separation structure. By not showing a sea-island layer separation structure or by having a sufficiently fine particle size, the polyvinyl acetal resin film can be ensured to have such transparency that allows the use thereof for a vehicle windshield and the like.

### (Method of Producing Polyvinyl Acetal Resin Film)

A method of producing the polyvinyl acetal resin film is not particularly restricted. The polyvinyl acetal resin film can be produced by blending the above-described polyvinyl acetal resin with, depending on the case, a prescribed amount of a plasticizer and other additives as necessary, homogeneously kneading the resultant, and then molding the kneaded product into a film shape by a known film forming method, such as an extrusion method, a calendering method, a press method, a casting method, or an inflation method.

Among known film forming methods, a method of producing the film using an extruder is particularly preferably employed. The resin temperature during extrusion is preferably 150 to 250°C, more preferably 170 to 230°C. An excessively high resin temperature causes degradation of the polyvinyl acetal resin, and this leads to a high content of a volatile substance. Meanwhile, an excessively low resin temperature also leads to a high content of a volatile substance. For efficient removal of a volatile substance, it is preferred to remove the volatile substance by vacuuming through a vent opening of the extruder.

In melt extrusion, by using cooling rolls having different surface profiles and materials, the 10-point average roughness and the friction angle of the resulting resin film surfaces can be controlled in specific ranges. For example, for the formation of a smooth surface, a smooth (mirror-finished) cooling roll typified by a mirror-finished metal cooling roll such as a metal elastic roll or a metal hard roll can be used and, for the formation of a rough surface, an embossing roll made of a metal, a hard rubber or the like, which corresponds to a desired surface profile (surface roughness), can be used. In order to allow each surface of the resin film to have a 10-point average roughness and a friction angle in the above-described respective specific ranges, it is preferred to select these rolls as appropriate for controlling the surface profiles of both surfaces of the resin film and to form the film using a resin material extruded from a T-die. For example, by using a mirror-finished roll as one of a pair of rolls for nipping the extruded resin material and using an embossing roll suitable for forming irregularities as the other roll, a resin film having a smooth surface and a relatively rough surface can be obtained.

From the viewpoint of making it easier to control the surface profiles of each surface of the polyvinyl acetal resin film and to attain the above-described specific 10-point average roughness and friction angle values, it is preferred to use an elastic roll as at least one of a pair of rolls for the film formation, and it is more preferred to use a metal elastic roll. Further, from the same viewpoint, the temperature of the polyvinyl acetal resin film at the time of being peeled off from the cooling rolls is lower than the glass transition temperature of the polyvinyl acetal resin contained in the polyvinyl acetal resin film by preferably not less than 5°C, more preferably not less than 10°C, still more preferably not less than 15°C, particularly preferably not less than 20°C. When the temperature of the polyvinyl acetal resin film at the time of being peeled off from the cooling rolls and the glass transition temperature satisfy the above-described relationship, surface roughness due to the tackiness of the polyvinyl acetal resin film at the time of being peeled off from the cooling rolls, or thickness unevenness due to shrinkage and the like of the film, is likely to be reduced. When the polyvinyl acetal resin contained in the polyvinyl acetal resin film comprises two or more polyvinyl acetal resins, it is preferred that the glass transition temperature of at least one of the polyvinyl acetal resins and the temperature of the polyvinyl acetal resin film at the time of being peeled off from the cooling rolls satisfy the above-described relationship.

In the present invention, the 10-point average roughness and the friction angle of each surface of the polyvinyl acetal resin film are both affected by the surface profile of the film; however, the 10-point average roughness and the friction angle do not necessarily have a certain correlation. Therefore, in the polyvinyl acetal resin film of the present invention, it is important to control the 10-point average roughness and the friction angle of each surface in the above-described respective prescribed ranges.

The polyvinyl acetal resin film of the present invention has excellent surface uniformity when unwound from a roll and thus exhibits an excellent effect of inhibiting deformation and breakage over time when other layer such as a functional layer is laminated thereon. Therefore, the polyvinyl acetal resin film of the present invention is suitable as a resin film on which a functional layer is to be laminated. The term "functional layer" used herein means a layer that imparts a specific function to a laminate such as a laminated glass, and examples thereof include a conductive layer, a specific-wavelength electromagnetic wave reflection layer such as an infrared reflection layer or a UV reflection layer, a color correction layer, an infrared absorption layer, a UV absorption layer, a fluorescent/light-emitting layer, a sound insulation layer, an electrochromic layer, a photochromic layer, a thermochromic layer, a designability layer, and a high-elastic-modulus layer.

When a functional layer is arranged, the functional layer is preferably arranged on a surface 1, which is one of the surfaces of the polyvinyl acetal resin film of the present invention that has a lower surface roughness. By arranging the functional layer on the surface having a lower surface roughness, the adhesion between the resin film and the functional layer is improved, and deformation and breakage of the functional layer over time are made unlikely to occur. When plural functional layers are arranged on the polyvinyl acetal resin film, the surface on which each functional layer is to be laminated may be selected as appropriate in accordance with the type and the purpose of the functional layer; however, in the production of a laminate (laminated glass) described below, foaming in the resulting laminated glass or the like can be effectively inhibited by bonding the surface 2 of the polyvinyl acetal resin film of the present invention with a transparent substrate; therefore, it is preferred that the plural functional layers be all arranged on the side of the surface 1.

### <Laminate>

The present invention also relates to a laminate comprising the polyvinyl acetal resin film of the present invention between a plurality of transparent substrates.

From the viewpoint of transparency, weather resistance and mechanical strength, the transparent substrates are each preferably an inorganic glass (hereinafter, may be simply referred to as "glass"), or an organic glass such as a methacrylic resin sheet, a polycarbonate resin sheet, a polystyrene-based resin sheet, a polyester-based resin sheet, a polyimide-based resin sheet, or a polycycloolefin-based resin sheet, more preferably an inorganic glass, a methacrylic resin sheet or a polycarbonate resin sheet, particularly preferably an inorganic glass. Examples of the inorganic glass include, but not particularly limited to: a float glass, a tempered glass, a semi-tempered glass, a chemically tempered glass, a green glass, and a quartz glass. Further, the shape of each transparent substrate to be used is not particularly restricted, and the transparent substrate may have a simple planar shape, or may have a curvature.

When the polyvinyl acetal resin film comprises a functional layer, in the laminate, the functional layer of the polyvinyl acetal resin film may be in contact with a transparent substrate, or may be in contact with other layer, such as the below-described plasticized polyvinyl acetal resin layer.

In the present invention, the laminate may further comprise a plasticized polyvinyl acetal resin layer. The plasticized polyvinyl acetal resin layer comprises a polyvinyl acetal resin and a plasticizer. As the polyvinyl acetal resin and the plasticizer that are contained in the plasticized polyvinyl acetal resin layer, it is possible to use the same ones as those that are exemplified above and can constitute the polyvinyl acetal resin film of the present invention.

The content of the plasticizer in the plasticized polyvinyl acetal resin layer in the initial state prior to lamination of layers is preferably not less than 16.0% by mass, more preferably 16.1 to 36.0% by mass, still more preferably 22.0 to 32.0% by mass, particularly preferably 26.0 to 30.0% by mass, based on a total mass of the plasticized polyvinyl acetal resin layer. When the content of the plasticizer is in this range, a laminated glass having excellent impact resistance is likely to be obtained. As the plasticized polyvinyl acetal resin layer, a plasticized polyvinyl acetal resin layer having a sound insulation function can be used. In this case, the content of the plasticizer in the initial state prior to lamination of layers is preferably not less than 30% by mass, more preferably 30 to 50% by mass, still more preferably 31 to 40% by mass, particularly preferably 32 to 35% by mass, based on a total mass of the plasticized polyvinyl acetal resin layer.

The plasticized polyvinyl acetal resin layer may also contain, as required, an additive(s) such as those that are exemplified above and constitute the polyvinyl acetal resin film of the present invention. Further, the plasticized polyvinyl acetal resin layer can be produced by the same method as the one used for producing the polyvinyl acetal resin film of the present invention.

The thickness of the plasticized polyvinyl acetal resin layer is preferably 100 to 1,600 µm, more preferably 350 to 1,200 µm, still more preferably 700 to 900 µm. When the thickness of the plasticized polyvinyl acetal resin layer is in this range, excellent penetration resistance is likely to be obtained. The thickness is measured using, for example, a thickness gauge or a laser microscope.

When the laminate comprises the plasticized polyvinyl acetal resin layer, a difference between the amount of vinyl alcohol units of the polyvinyl acetal resin constituting the polyvinyl acetal resin film of the present invention and the amount of vinyl alcohol units of the polyvinyl acetal resin constituting the plasticized polyvinyl acetal resin layer (difference prior to lamination) is preferably 5% by mole or less, more preferably 3% by mole or less, particularly preferably 1% by mole or less. When the polyvinyl acetal resin constituting the polyvinyl acetal resin film of the present invention or the polyvinyl acetal resin constituting the plasticized polyvinyl acetal resin layer is composed of a mixture of plural resins, it is preferred that the average vinyl alcohol unit amount of the polyvinyl acetal resin constituting the polyvinyl acetal resin layer of the present invention and the average vinyl alcohol unit amount of the polyvinyl acetal resin constituting the plasticized polyvinyl acetal resin layer satisfy the above-described relationship. When the above-described difference is not larger than the above-described upper limit value, a difference in refractive index between the polyvinyl acetal resin film and the plasticized polyvinyl acetal resin layer in an equilibrium state after migration of the plasticizer in the laminate is small; therefore, when the plasticized polyvinyl acetal resin layer and the polyvinyl acetal resin film are used at different dimensions from each other, their boundary is hardly visible, which is preferred.

On the other hand, by increasing the difference between the amount of vinyl alcohol units of the polyvinyl acetal resin constituting the polyvinyl acetal resin film of the present invention and the amount of vinyl alcohol units of the polyvinyl acetal resin constituting the plasticized polyvinyl acetal resin layer, the plasticizer amount in the polyvinyl acetal resin film and the plasticizer amount in the plasticized polyvinyl acetal resin layer are made to be different from each other in an equilibrium state after migration of the plasticizer, whereby a laminate having excellent sound insulation performance can be obtained. In this case, the difference in the amount of vinyl alcohol units is preferably 5% by mole or larger, more preferably 8% by mole or larger.

The plasticized polyvinyl acetal resin layer may be a commercially available plasticized polyvinyl butyral sheet, a plasticized polyvinyl acetal resin layer in which nanoparticles having an infrared absorption or reflection capacity are dispersed, a colored plasticized polyvinyl acetal resin layer, or a plasticized polyvinyl acetal resin layer having a sound insulation function.

The laminate can be produced by a method known to those of ordinary skill in the art. For example, on a transparent substrate, the polyvinyl acetal resin film of the present invention and, if laminated, a plasticized polyvinyl acetal resin layer are arranged in any number of layers in any order, and another transparent substrate is further arranged thereon, after which the temperature is raised as a pre-thermocompression step so as to fuse the polyvinyl acetal resin film(s) and, if laminated, the plasticized polyvinyl acetal resin layer(s) onto the transparent substrate entirely or locally, and the resultant is subsequently treated in an autoclave, whereby the laminate can be produced. Alternatively, the laminate may be produced by preliminary bonding in advance the polyvinyl acetal resin film of the present invention and, if laminated, those layers constituting the laminate other than transparent substrates such as a plasticized polyvinyl acetal resin layer, subsequently arranging the resultant between two transparent substrates, and then fusing them with each other at a high temperature.

In this process, the surface of the polyvinyl acetal resin film of the present invention that comes into contact with a transparent substrate is preferably the surface 2 having a higher 10-point average roughness. By bringing the surface having a higher surface roughness into contact with the transparent substrate, degassing can be performed more easily at the time of bonding together the transparent substrates and the polyvinyl acetal resin film, so that foaming in the resulting laminate (laminated glass) can be inhibited.

The laminate of the present invention can be used as a laminated glass of a building or a vehicle. Therefore, the present invention also relates to a laminate which is a laminated glass for vehicles. The term "laminated glass for vehicles" used herein means a windshield glass, a rear glass, a roof glass, a side glass or the like for vehicles such as trains, trams, automobiles, ships, and aircraft.

In the present invention, when the laminate comprises a plasticized polyvinyl acetal resin layer adjacent to or in close contact with the polyvinyl acetal resin film, a plasticizer contained in the plasticized polyvinyl acetal resin layer usually migrates to a layer of the polyvinyl acetal resin film over time, and the amount of the plasticizer contained in the plasticized polyvinyl acetal resin layer becomes equal to the amount of the plasticizer contained in the layer of the polyvinyl acetal resin film. In the present invention, this average plasticizer amount is preferably 18 to 35% by mass, more preferably 20 to 30% by mass, particularly preferably 25 to 29% by mass. When the average plasticizer amount is in this range, a laminated glass having desired characteristics, such as reduction of impact on the head of a person in a vehicle upon collision, is likely to be obtained. The average plasticizer amount can be adjusted to be in the above-described range by controlling the amount of the plasticizer contained in the plasticized polyvinyl acetal resin layer, the thickness of the plasticized polyvinyl acetal resin layer, the amount of the plasticizer contained in the polyvinyl acetal resin film, and the thickness of the polyvinyl acetal resin film.

### EXAMPLES

The present invention will now be described concretely by way of Examples and Comparative Examples; however, the present invention is not restricted to the below-described Examples. In the below-described Examples, unless otherwise specified, "%" means "% by mass".

### (1) Polyvinyl Acetal Resin Materials

The formulations and physical properties of the polyvinyl acetal resins used in Examples and Comparative Examples are shown in Table 1.

**[Table 1]**

| Polyvinyl acetal resin material | Amount of vinyl alcohol units (% by mole) | Acetalization Degree (% by mole) | Amount of vinyl acetate units (% by mole) | Viscosity of 10%-by-mass toluene/ethanol (1:1) solution (mPa·s) |
|---|---|---|---|---|
| 1 | 28.5 | 70.8 | 0.7 | 152 |
| 2 | 28.9 | 70.4 | 0.7 | 1,410 |

Polyvinyl acetal resin materials PVB-a and PVB-b were obtained by blending the polyvinyl acetal resins 1 and 2 shown in Table 1 at the respective mass ratios shown in Table 2. For the thus obtained polyvinyl acetal resin materials, the viscosity of a 10%-by-mass toluene/ethanol (1:1, mass ratio) solution, the peak-top molecular weight, and the molecular weight distribution were measured or calculated in accordance with the respective methods described below. In addition, the film-forming properties of the PVB-a and the PVB-b were evaluated in accordance with the below-described method.

### <Measurement of Viscosity of Polyvinyl Acetal Resins>

For the measurement of the viscosity of the polyvinyl acetal resins 1 and 2 shown in Table 1 above and mixtures thereof shown Table 2 below, the polyvinyl acetal resins 1 and 2 and the mixtures thereof having the respective ratios were each added to and dissolved in a mixed solution of toluene and ethanol (1:1) at a concentration of 10% by mass, and the viscosity of the thus obtained solution was measured using a Brookfield-type (B-type) viscometer at 20°C and 30 rpm.

### <Measurement of Peak-top Molecular Weight and Molecular Weight Distribution of Polyvinyl Acetal Resin Materials>

The thus obtained resins for forming polyvinyl acetal resin films were each analyzed by GPC. For the GPC analysis, GPCmax TDA305 manufactured by Viscotek Corporation was used as an analyzer along with an RI detector; as columns, two SHODEX GPC KF-806L columns, which were connected together and at one end of which was separately connected with a guard column SHODEX KF-G were used; a THF solvent and a standard polystyrene (EASICAL GPC/SEC Calibration Standards PS-1, manufactured by Agilent Technologies, Inc.) were used; and OmniSE, C4.7 was used as an analysis software. The measurement was performed at 40°C with an injection amount of 100 µL, and the peak-top molecular weight and the molecular weight distribution of each of the above-described resins were determined. The results thereof are shown in Table 2.

### <Evaluation of Film-Forming Property>

Pellets of PVB-a and PVB-b were melt-extruded using a single screw extruder, and the film-forming property was evaluated based on the following criteria. The results thereof are shown in Table 2.
A: The film-forming property was very good.
B: The film-forming property was good.
C: A film was formed although the film was colored and a decomposition gas was generated.
D: A film could not be formed.

**[Table 2]**

| Polyvinyl acetal resin material | Resin 1:Resin 2 (mass ratio) | Viscosity of 10%-by-mass toluene/ethanol (1:1) solution (mPa·s) | Peak-top molecular weight | Molecular weight distribution (Mw/Mn) | Film-forming property |
|---|---|---|---|---|---|
| PVB-a | 80:20 | 229 | 125,300 | 2.9 | A |
| PVB-b | 100:0 | 152 | 111,700 | 2.5 | B |

### [Example 1]

### (1) Production of Polyvinyl Acetal Resin Film

The polyvinyl butyral resin 1 (hereinafter, referred to as "resin 1") and the polyvinyl butyral resin 2 (hereinafter, referred to as " resin 2"), which had the respective physical properties shown in Table 1, were blended at a mass ratio of 80:20 to obtain a PVB-a, and the thus obtained PVB-a was melt-kneaded, extruded in the form of a strand, and then pelletized. The thus obtained pellet was melt-extruded at 230°C using a single screw extruder and a T-die. A film was formed using a metal elastic roll and a metal hard roll, whereby a polyvinyl acetal resin film PVBF-A was produced.

### (2) Evaluation of Physical Properties/Characteristics of Polyvinyl Acetal Resin Film

The surface physical properties of the thus obtained polyvinyl acetal resin film were measured in accordance with the below-described respective methods. In addition, when the polyvinyl acetal resin film was wound into the form of a roll, edge misalignment and self-adhesion were evaluated in accordance with the below-described respective methods.

### <10-point Average Roughness Rz Value>

For both surfaces of the film, the 10-point average roughness Rz value was measured in accordance with JIS B0601-1994 using SURFTEST SJ-310 manufactured by Mitutoyo Corporation (measurement force: 0.75 mN, stylus shape: tip radius = 2 µmR, tip angle = 60°). The results thereof are shown in Table 3.

### <Friction Angle>

For both surfaces of the film, the friction angle was measured in accordance with the inclination method prescribed in JIS P8147 using a friction tester (model: AN-S, manufactured by Toyo Seiki Seisaku-sho, Ltd.). Specifically, on an inclined plate, a 100 µm-thick PET film (TOYOBO ESTER (registered trademark) film, product name: 5101; corona-treated on one side) was immobilized such that its corona-treated side was not in contact with the inclined plate. Using a rectangular flat-bottomed metal block having a width of 60 mm, a length of 100 mm and a mass of 1,000 g as a weight, the polyvinyl acetal resin film to be measured, which had a width of 60 mm and a length of about 120 mm, was immobilized with the weight. Next, after confirming that the tester was horizontally placed, the inclination angle of the inclined plate was adjusted to 0, and the polyvinyl acetal resin film immobilized with the weight was set such that the surface to be measured was in contact with the corona-treated surface of the PET film. The inclination angle of the inclined plate was increased at a constant rate of 1°/sec, and the inclination angle at which the polyvinyl acetal resin film immobilized with the weight started to slide was read. The same test was repeated 10 times, and an average value was calculated and defined as the friction angle. The measurement atmosphere had a temperature of 20 ± 2°C and a relative humidity of 65 ± 5%. The results are shown in Table 3.

### <Evaluation of Edge Misalignment>

The polyvinyl acetal resin film of 50 µm in thickness was wound into the form of a roll around a winding core, which was made of an ABS resin and had an inner diameter of 152 mm, an outer diameter of 164 mm and a width of 400 mm, at a winding tension of 90 N/m-width, a winding rate of 10 m/min and a winding length of 1,000 m. The thus obtained roll-form scroll was left horizontally for one month under an environment having a temperature of 35°C and a relative humidity of 65%, after which the state of edge misalignment of the roll-form scroll was visually observed. The evaluation criteria were as follows. The results thereof are shown in Table 3.
A: No misalignment was observed.
B: The misalignment of the film edge was smaller than 1 mm.
C: The misalignment of the film edge was 1 mm or larger.

### <Evaluation of Self-adhesion>

A polyimide tape was bonded to a test piece, which was obtained by cutting the polyvinyl acetal resin film into a size of 10 cm x 3 cm, in a portion of from a minor-axis end to 5 mm inside, to prepare a film test piece. On this film test piece, the same test piece as described above to which a polyimide tape was not bonded (test piece that was made of the same material and had the same size) was disposed to produce a laminate in which the polyimide tape was sandwiched between the two polyvinyl acetal resin film test pieces and held at their ends. In this process, one surface (surface 1) and the other surface (surface 2) of the test pieces were brought into contact with each other. A 6-kg weight was placed on the laminate, and this laminate was left to stand at 50°C for 8 hours, and then under an environment of 23°C and 50%RH for 24 hours. Thereafter, the two laminated pieces were peeled off by hand from the portion of the polyimide tape, and the condition of each piece was observed. The evaluation criteria were as follows. The results thereof are shown in Table 3.
A: The test pieces were easily peeled off, and no deformation was observed on the film surface.
B: The test pieces were adhered in some parts; however, when they were peeled off, no deformation was observed on the film surface.
C: The test pieces were strongly adhered and, when they were peeled off, deformation was observed on the film surface.

### [Example 2]

A polyvinyl acetal resin film PVBF-B was obtained by performing film formation in the same manner as in Example 1, except that the metal elastic roll was changed to a rubber elastic roll. The surface physical properties and characteristics of the thus obtained PVBF-B were measured and evaluated by the same methods as in Example 1. The results thereof are shown in Table 3.

### [Example 3]

A polyvinyl acetal resin film PVBF-C was obtained by performing film formation in the same manner as in Example 1, except that the PVB-b was used as a polyvinyl acetal resin material in place of the PVB-a. The surface physical properties and characteristics of the thus obtained PVBF-C were measured and evaluated by the same methods as in Example 1. The results thereof are shown in Table 3.

### [Example 4]

Using 3GO as a plasticizer, the resin PVB-a was melt-kneaded with the plasticizer such that the plasticizer was added in an amount of 5% by mass. Subsequently, the resulting melt-kneaded product was extruded in the form of a strand and then pelletized. Using the thus obtained pellets, a polyvinyl acetal resin film PVBF-D was obtained by performing film formation in the same manner as in Example 1. The surface physical properties and characteristics of the thus obtained PVBF-D were measured and evaluated by the same methods as in Example 1. The results thereof are shown in Table 3.

### [Example 5]

Pellets were obtained in the same manner as in Example 4, except that the amount of the plasticizer was changed from 5% by mass to 15% by mass. Using the thus obtained pellets, a polyvinyl acetal resin film PVBF-E was obtained by performing film formation in the same manner as in Example 1, except that the metal elastic roll was changed to a rubber elastic roll. The surface physical properties and characteristics of the thus obtained PVBF-E were measured and evaluated by the same methods as in Example 1. The results thereof are shown in Table 3.

### [Example 6]

A polyvinyl acetal resin film PVBF-F was obtained by performing film formation in the same manner as in Example 1, except that the metal elastic roll was changed to a metal hard roll. The surface physical properties and characteristics of the thus obtained PVBF-F were measured and evaluated by the same methods as in Example 1. The results thereof are shown in Table 3.

### [Comparative Example 1]

A polyvinyl acetal resin film PVBF-G was obtained by performing film formation in the same manner as in Example 1, except that the metal hard roll was changed to a metal elastic roll. The surface physical properties and characteristics of the thus obtained PVBF-G were measured and evaluated by the same methods as in Example 1. The results thereof are shown in Table 3.

### [Comparative Example 2]

A polyvinyl acetal resin film PVBF-H was obtained by performing film formation in the same manner as in Example 6, except that the PVB-b was used as a polyvinyl acetal resin material in place of the PVB-a. The surface physical properties and characteristics of the thus obtained PVBF-H were measured and evaluated by the same methods as in Example 1. The results thereof are shown in Table 3.

### [Comparative Example 3]

A polyvinyl acetal resin film PVBF-I was obtained by performing film formation in the same manner as in Example 1, except that the metal elastic roll was changed to an embossing roll. The surface physical properties and characteristics of the thus obtained PVBF-I were measured and evaluated by the same methods as in Example 1. The results thereof are shown in Table 3.

**[Table 3]**

| | Polyvinyl acetal resin film | | | | | | Film surface physical properties | | | | | | Evaluation of film properties | |
|---|---|---|---|---|---|---|---|---|---|---|---|---|---|---|
| | Type | Polyvinyl acetal resin | Film thickness (µm) | Amount of plasticizer [% by weight] | Roll | | Surface 1 | | Surface 2 | | Δfriction angle (°) | ΔRz (µm) | Roll edge misalignment over time | Self-adhesion during storage |
| | | | | | Surface 1 | Surface 2 | Rz (µm) | Friction angle (°) | Rz (µm) | Friction angle (°) | | | | |
| Example 1 | PVBF-A | PVB-a | 50 | 0 | metal hard roll | metal elastic roll | 1.2 | 33.2 | 3.6 | 28.7 | 4.5 | 2.4 | A | A |
| Example 2 | PVBF-B | PVB-a | 50 | 0 | hard roll | rubber elastic roll | 0.9 | 31.4 | 5.8 | 24.6 | 6.8 | 4.9 | B | A |
| Example 3 | PVBF-C | PVB-b | 50 | 0 | metal hard roll | metal elastic roll | 0.7 | 31.9 | 3.9 | 29.1 | 2.8 | 3.2 | A | B |
| Example 4 | PVBF-D | PVB-a | 50 | 5 | metal hard roll | metal elastic roll | 0.5 | 34.3 | 3.8 | 29.5 | 4.8 | 3.3 | A | B |
| Example 5 | PVBF-E | PVB-a | 50 | 15 | metal hard roll | rubber elastic roll | 0.8 | 38.6 | 5.6 | 29.8 | 8.8 | 4.8 | A | B |
| Example 6 | PVBF-F | PVB-a | 50 | 0 | metal hard roll | metal hard roll | 1.9 | 32.1 | 2.1 | 30.5 | 1.6 | 0.2 | A | B |
| Comparative Example 1 | PVBF-G | PVB-a | 50 | 0 | metal elastic roll | metal elastic roll | 1.2 | 31.2 | 1.2 | 31.2 | 0.0 | 0.0 | A | C |
| Comparative Example 2 | PVBF-H | PVB-b | 50 | 0 | metal hard roll | metal hard roll | 2.1 | 32.4 | 2.5 | 32.5 | 0.1 | 0.4 | A | C |
| Comparative Example 3 | PVBF-I | PVB-a | 50 | 0 | metal hard roll | embossing roll | 1.0 | 34.2 | 8.0 | 22.8 | 11.4 | 7.0 | C | A |

The polyvinyl acetal resin films of Examples 1 to 6 according to the present invention exhibited an excellent effect of inhibiting edge misalignment when wound in the form of a roll as well as an excellent effect of inhibiting self-adhesion during storage. On the other hand, none of the polyvinyl acetal resin films of Comparative Examples 1 to 3, which did not satisfy the requirements of the present invention, exhibited a combination of an effect of inhibiting edge misalignment and an effect of inhibiting self-adhesion during storage.

## Claims

1. A polyvinyl acetal resin film, comprising a polyvinyl acetal resin material,
wherein
the polyvinyl acetal resin film has a thickness of 10 to 350 µm,
one surface has a 10-point average roughness Rz value of less than 2 µm and a friction angle of larger than 31° but 40° or smaller,
the other surface has a 10-point average roughness Rz value of 2 µm to 7 µm and a friction angle of 20° to 31°,
the 10-point average roughness Rz values are values determined in accordance with JIS B0601-1994,
the friction angles are values determined in accordance with the inclination method prescribed in JIS P8147,
a viscosity of a toluene/ethanol (1:1, mass ratio) solution containing 10%-by-mass of a polyvinyl acetal resin contained in the polyvinyl acetal resin material, which is measured at 20°C and 30 rpm using a Brookfield-type (B-type) viscometer, is 100 to 1,000 mPa·s, and
the amount of a plasticizer in the polyvinyl acetal resin film is 0 to 20% by mass based on a total mass of the polyvinyl acetal resin film.

2. The polyvinyl acetal resin film according to claim 1, wherein an absolute difference between the friction angle of one surface and that of the other surface is 2° to 10°.

3. The polyvinyl acetal resin film according to claim 1 or 2, wherein an absolute difference between the 10-point average roughness Rz value of one surface and that of the other surface is 1 µm to 5 µm.

4. The polyvinyl acetal resin film according to any one of claims 1 to 3, wherein the viscosity of the toluene/ethanol (1:1, mass ratio) solution containing 10%-by-mass of the polyvinyl acetal resin contained in the polyvinyl acetal resin material, which is measured at 20°C and 30 rpm using a Brookfield-type (B-type) viscometer, is 300 mPa·s or lower.

5. The polyvinyl acetal resin film according to any one of claims 1 to 3, wherein the viscosity of the toluene/ethanol (1:1, mass ratio) solution containing 10%-by-mass of the polyvinyl acetal resin contained in the polyvinyl acetal resin material, which is measured at 20°C and 30 rpm using a Brookfield-type (B-type) viscometer, is higher than 200 mPa·s.

6. The polyvinyl acetal resin film according to any one of claims 1 to 5, wherein the polyvinyl acetal resin in the polyvinyl acetal resin material has a molecular weight distribution of 2.7 or higher.

7. The polyvinyl acetal resin film according to any one of claims 1 to 6, wherein the polyvinyl acetal resin in the polyvinyl acetal resin material is a mixture of at least two polyvinyl acetal resins having different viscosity-average polymerization degrees, or an acetalized product of a mixture of at least two polyvinyl alcohol-based resins having different viscosity-average polymerization degrees.

8. A laminate, comprising the polyvinyl acetal resin film according to any one of claims 1 to 7 between a plurality of transparent substrates.

9. The laminate according to claim 8, further comprising a plasticized polyvinyl acetal resin layer.

10. The laminate according to claim 8 or 9, wherein the transparent substrate is a glass.

11. A glass for a vehicle, comprising the laminate according to any one of claims 8 to 10.
